# EUROPÄISCHE PATENTSCHRIFT

(11) **EP 1 720 035 B1**
(45) Veröffentlichungstag und Bekanntmachung des Hinweises auf die Patenterteilung: **09.01.2008**
(21) Anmeldenummer: 06005922.7
(22) Anmeldetag: 23.03.2006
(51) Int. Cl.: G01S 13/93, G01S 7/41

(54) **Verfahren zum Erkennen potentieller Bedrohungsobjekte**
Method for identifying potential threat objects
Procédé destiné à la reconnaissance d'objets représentant une menace potentielle

(30) Priorität: 28.04.2005 DE 102005019733
(43) Veröffentlichungstag der Anmeldung: 08.11.2006
(73) Patentinhaber: ATLAS ELEKTRONIK GMBH, 28305 Bremen (DE)
(72) Erfinder: Harre, Ingo Dipl.-Ing., 28329 Bremen (DE)

(56) Entgegenhaltungen:
- DE-A1- 2 457 737
- DE-A1- 19 538 885
- GB-A- 1 267 093
- US-A1- 3 670 330
- US-A1- 5 179 377

## Beschreibung

Die Erfindung betrifft ein Verfahren zum Erkennen einer von einem in einem Überwachungsgebiet sich bewegenden Objekt ausgehenden potentiellen Bedrohung der im Oberbegriff des Anspruchs 1 definierten Gattung.

Insbesondere Seeanrainerstaaten wollen ihre territorialen Gewässer vor unerwünschten Aktivitäten schützen. Neue politische Veränderungen, Ausdehnungen von Schutzzonen, zunehmender Schiffsverkehr auf vorgeschriebenen Schifffahrtstrassen in Küstennähe, internationale Fischereiregulierungen, wie Festlegung von Fanggebieten, und nationale Anliegen des Umweltschutzes im Küstenbereich sowie die Zunahme illegaler Aktivitäten auf See veranlassen viele dieser Staaten eine umfassende Küstenüberwachung vorzunehmen. Hierzu sind längs der Küstenlinie eine Vielzahl von Überwachungssensoren, wie Radar- und Sonaranlagen, installiert, mit denen die Schittbewegungen in zugeordneten Überwachungsgebieten verfolgt und auf einem Lageplan oder Lagedisplay dargestellt werden. Die Interpretation des Lageplans wird einem Operator überlassen, wobei das Erkennen von potentiellen Bedrohungen, die von dem einen oder anderen Schiff ausgehen und mit einer mehr oder weniger deutlichen Annäherung an ein der Küste vorgelagerten Schutzgebiet verbunden sind, den Erfahrungen des Operators überlassen wird.

Es sind auch schon Hilfsmittel bekannt, wie beispielsweise das Definieren von Schutzgebieten auf dem Lageplan durch den Operator, wobei detektierte und getrackte (verfolgte) Objekte beim Eindringen in ein Schutzgebiet Alarm auslösen.

Bei einem bekannten Kollisionswarn-Radar (US 3 670 330) wird im Zentrum des Bildschirms einer Kathodenstrahlröhre die Position des Eigenschiffs angezeigt und konzentrisch um die Eigenschiffsposition ein sog. Guard-Ring dargestellt. Für die Kollisions-Warnung mit einem vom Radar georteten Fremdschiff, dessen momentane Position fortlaufend auf dem Bildschirm dargestellt werden, wird einerseits ein sog. τ-Kriterium (tau criterion) und andererseits das Guard-Ring- oder Näherungskriterium (guard ring or proximity criterion) verwendet. Für das erste Kriterium wird die Entfernung des Fremdschiffs und die Entfernungsänderung berechnet, daraus der Quotient gebildet und mit einem Wert k verglichen, der einen Entscheidungsschwellwert mit einer zeitlichen Dimension darstellt. Das kombinierte Kollisions-Kriterium stellt fest, dass bei unverändertem Kurs des Eigenschiffs dann vom Fremdschiff eine Bedrohung, also eine Kollisionsgefahr, ausgeht, wenn die Entfernung des Fremdschiffs kleiner ist also der Radius des Guard-Rings (proximity criterion) oder wenn das Fremdschiff sich dem Eigenschiff nähert und der Quotient aus Entfernung und Entfernungsänderung kleiner ist als der kritische k-Wert (tau criterion).

Bei einem bekannten Verfahren zum Anzeigen gefahrbringender Bewegungen möglicher Kollisionsgegner in der See- und Küstenschifffahrt mit einem Radarpeil- oder Rundsuchgerät (DE 24 57 737 A1) werden die vom Radar-Gerät empfangenen Echos möglicher Kollisionsgegner entsprechend ihrer erfassten Richtung kontinuierlich als Seitenpeilungen auf dem Bildschirm eines zusätzlichen Sichtgeräts auf einer der Horizontlinie entsprechenden Geraden und zusätzlich entsprechend ihrer zeitlichen Empfangsverzögerung als Entfernungswert dargestellt. Die Echos werden dabei auf dem Bildschirm in rechtwinklige Koordinaten als Leuchtpunkte dargestellt, deren seitlicher Abstand vom Koordinatenmittelpunkt der Peilung und deren vertikaler Abstand von der Horizontlinie der Entfernung entsprechen. Zur Durchführung dieses Verfahrens dient ein rechteckiger Bildschirm, dessen zugehöriger Elektronstrahlerzeuger den der Seitenpeilung entsprechenden Echosignalwert zur horizontalen Auslenkung und den der Entfernung entsprechenden Echosignalwert zur vertikalen Auslenkung verwendet. Durch diese Radardarstellung in einem rechtwinkligen Koordinatensystem aus Eigenpeilung und Entfernung möglicher Kollisionsgegner erhält der Schiffsführer entsprechend seiner normalerweise auf den Horizont gerichteten Blickrichtung ein sehr einfaches Hilfsmittel für die zu treffenden Manöver zur Vermeidung von Kollisionen.

Der Erfindung liegt die Aufgabe zugrunde, ein Verfahren anzugeben, mit dem von detektierten Objekten solche Objekte automatisch erkannt werden, die sich einer Schutzzone oder einem Schutzgebiet nähern und von denen aufgrund ihres Fahrverhaltens eine potentielle Bedrohung für zu schützende Bereiche oder Objekte, ausgehen könnte.

Die Aufgabe ist erfindungsgemäß durch die Merkmale im Anspruch 1 gelöst.

Das erfindungsgemäße Verfahren hat den Vorteil, dass ein Alarm nicht erst dann ausgelöst wird, wenn eine Gefährdung bereits eingetreten ist, z.B. wenn das Objekt bereits in eine Schutzzone oder ein Schutzgebiet eindringt, sondern die Wahrscheinlichkeit einer zu erwartenden Gefährdung angezeigt wird, so dass Gegenmaßnahmen rechtzeitig getroffen werden können, z.B. Abwehrkräfte zur Verhinderung des Eindringens in die Schutzzone oder das Schutzgebiet rechtzeitig alarmiert und in Bereitschaft versetzt werden können. Dabei wird die Wahrscheinlichkeit einer Gefährdung durch den Bedrohungsgrad kenntlich gemacht, der entweder als Analogwert oder in mehreren Abstufungen, z.B. groß, gering, Null, ausgegeben wird.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß vorteilhafter Ausführungsformen der Erfindung wird die Bewertung der bestimmten Werte von Abstand und Abstandsänderung mittels getrennter Bewertungsfunktionen, die vorzugsweise empirisch bestimmt werden, oder alternativ durch Anwendung der Fuzzylogik vorgenommen.

Im ersten Fall werden gemäß einer vorteilhaften Ausführungsform der Erfindung mit den bestimmten Werten von Abstand und Abstandsänderung aus den Bewertungsfunktionen Bewertungsgrößen abgeleitet und die den einzelnen Objektpositionen zugehörigen Paare der Bewertungsgrößen für Abstandswert und Abstandsänderungswert zur Bildung der Bedrohungsfunktion, z.B. durch Addition, zusammengefasst.

Im alternativen Fall werden gemäß einer bevorzugten Ausführungsform der Erfindung die bestimmten Werte von Abstand einerseits und Abstandsänderung andererseits als linguistische Variable zur Fuzzyfication jeweils mit Zugehörigkeitsfunktionen bewertet, und aus den Zugehörigkeitsfunktionswerten wird durch unscharfes Schließen, der sog. Fuzzyinferenz, über vorgebbare Regeln ein Maß der Bedrohung bestimmt.

Gemäß einer vorteilhaften Ausführungsform der Erfindung werden zur Bildung der linguistischen Variablen die ermittelten Werte von Abstand einerseits und Abstandsänderung andererseits jeweils in einen Bereich "klein" und in einen Bereich "groß" eingeteilt.

Gemäß vorteilhafter Ausführungsformen der Erfindung werden die Abstandsänderungen als zeitliches Differenzial der Abstände berechnet, also die Annäherungsgeschwindigkeit des Objekts an die Referenzlinie bestimmt, oder als Wegdifferenzial der Abstände berechnet, so dass die Abstandsänderung die prozentuale Abstandsänderung pro gefahrener Streckeneinheit darstellt.

Gemäß einer vorteilhaften Ausführungsform der Erfindung wird als Referenzlinie eine Schutzlinie aus mindestens einer Geraden herangezogen, die längs eines Randes eines Schutzgebiets, vorzugsweise längs des seeseitigen Randes eines einem Küstenabschnitt vorgelagerten Schutzgebiets, gezogen wird. Als Abstand wird dann die Länge des von der Objektposition auf die Schutzlinie gefällten Lots definiert, was im folgenden als Lotabstand bezeichnet wird. Vorteilhaft wird die Schutzlinie als aus mehreren Geraden zusammengesetzter Polygonzug ausgeführt, wodurch sich z.B. an stark zerklüfteten Küstenlinien eine für das Verfahren geeignete Schutzlinie erstellen lässt, die bei der rechnerischen Auswertung von einem Polynom repräsentiert wird.

Gemäß einer alternativen Ausführungsform der Erfindung wird als Referenzlinie eine Schutzlinie herangezogen, die um eine Schutzzone gelegt ist, die eine mit den Überwachungssensoren ausgerüstete Plattform umgibt. Die Plattform kann ortsfest oder beweglich sein. Im letzteren Fall kann sie ein Einzelschiff oder ein Schiff in einem Schiffsverband (Flotte) sein, um den die Referenzlinie zur Festlegung der Schutzzone gezogen ist. Als Abstand zwischen momentaner Objektposition und Referenzlinie wird die Entfernung der Objektposition von der Plattform verwendet, die um den in der Schutzzone sich erstreckenden Entfernungsabschnitt reduziert ist. Dies hat den Vorteil, dass die Bedrohung durch auf Kollisionskurs zur Plattform fahrende Objekte sehr frühzeitig erkannt wird und dadurch das bei Kollisionskurs bestehende Gefahrenpotential im Vergleich zu einem sog. Collision Avoidance Radar wesentlich besser beurteilt und so reduziert werden kann. Bei großen Entfernungen oder relativ kleinen Schutzzonen wird der sich in der Schutzzone erstreckende Entfernungsabschnitt vernachlässigbar klein, so dass der in Rede stehende Abstand gleich der Entfernung der Objektposition von der Plattform gesetzt werden kann.

Das erfindungsgemäße Verfahren ist anhand von in der Zeichnung illustrierten, sehr vereinfachten Ausführungsbeispielen im folgenden näher beschrieben. Es zeigen:
- Fig. 1: ein Blockschaltbild des Verfahrensablaufs gemäß einem ersten Ausführungsbeispiel,
- Fig. 2: ein Lageplan im x/y-Koordinatensystem mit dargestellter Schutzlinie und festgehaltenen Objektpositionen (Objekttrack) eines im Überwachungsgebiet sich bewegenden Objekts,
- Fig. 3: ein Diagramm des Verlaufs des bestimmten Lotabstands d der Objektpositionen von der Schutzlinie in Fig. 2,
- Fig. 4: ein Diagramm der bestimmten Lotabstandsänderung dd, hier der Annäherungsgeschwindigkeit des Objekts an die Schutzlinie in Fig. 2,
- Fig. 5: eine empirisch ermittelte Bewertungsfunktion u(d) für die bestimmten Werte des Lotabstands d,
- Fig. 6: eine empirisch ermittelte Bewertungsfunktion für die bestimmten Werte der Lotabstandsänderung dd,
- Fig. 7: ein Diagramm der für die bestimmten Werte des Lotabstands d in Fig. 3 aus der Bewertungsfunktion u(d) gemäß Fig. 5 abgeleiteten Bewertungsgrößen u(dᵢ),
- Fig. 8: ein Diagramm der für die bestimmten Werte der Lotabstandsänderung aus der Bewertungsfunktion gemäß Fig. 6 abgeleiteten Bewertungsgrößen v(dᵢ).
- Fig. 9: der Lageplan in Fig. 2 mit Darstellung der aus der Zusammenfassung.der Diagramme in Fig. 7 und 8 hervorgegangenen Bedrohungsfunktion,
- Fig. 10: ein Blockschaltbild des Verfahrensablaufs gemäß einem zweiten Ausführungsbeispiel,
- Fig. 11: ein Beispiel für Zugehörigkeitsfunktionen M1 für die linguistischen Variablen "klein" k und "groß" g des Lotabstands d als Diagramm und als Tabelle,
- Fig. 12: ein Diagramm der mit den Zugehörigkeitsfunktionen gemäß Fig. 11 bewerteten, linguistischen Variablen "klein" und "groß" für die bestimmten Werte von Lotabstand dᵢ in Zuordnung zu den Objektpositionen (x-Koordinate),
- Fig. 13: ein Beispiel für Zugehörigkeitsfunktionen M2 für die linguistischen Variablen "klein" k und "groß" g der Lotabstandsänderung dd als Diagramm und als Tabelle,
- Fig. 14: ein Diagramm der mit den Zugehörigkeitsfunktionen gemäß Fig. 13 bewerteten, linguistischen Variablen "klein" und "groß" für die bestimmten Werte der Lotabstandsänderung ddᵢ in Zuordnung zu den Objektpositionen (x-Koordinate),

- Fig. 15: ein Diagramm und eine Tabelle einer beispielhaften Regel zur Verknüpfung der Zugehörigkeitsfunktionswerte der linguistischen Variablen aus Fig. 12 und 14,
- Fig. 16: der Lageplan gemäß Fig. 2 mit Darstellung der Bedrohungsfunktion, wie sie bei Anwendung der Fuzzylogik gemäß Fig. 10 bis 15 erhalten wird,
- Fig. 17: ein Lageplan mit einer Küstenlinie und einer als Polynom ausgeführten Schutzlinie,
- Fig. 18: eine Displaydarstellung eines fahrenden Schiffes mit festgehaltenen Schiffspositionen (Schiffstrack) und festgehaltenen Objektpositionen (Objekttrack) eines in dem vom Schiff überwachten Seegebiet sich bewegenden Objektes.

Mit dem nachstehend in verschiedenen Ausführungsbeispielen beschriebenen Verfahren wird automatisch eine von in einem Überwachungsgebiet sich bewegenden Objekten ausgehende, potentielle Bedrohung erfasst und ein mehrstufiger Bedrohungsgrad, d.h. der Grad der Wahrscheinlichkeit des Eintretens einer unerwünschten Aktivität durch im Überwachungsgebiet sich bewegende Objekte, kenntlich gemacht. Die Objekte werden mittels Sensoren 11, z.B. Radar- und/oder Sonaranlagen, detektiert und getrackt, d.h. fortlaufend ihre momentanen Positionen bestimmt. Zur Ermittlung einer von einem detektierten Objekt ausgehenden Bedrohung wird eine Referenzlinie definiert und eine potentielle Bedrohung als umso größer angenommen, je größer eine Verknüpfung aus dem bewerteten Abstand der Objektposition von der Referenzlinie und der bewerteten Änderung des Abstands ist. Die Änderung des Abstands wird dabei als zeitliches Differenzial des Abstandes oder als Wegdifferenzial des Abstandes bestimmt. Unter Abstand wird hier in Übereinstimmung mit der mathematischen Definition die Länge der kürzesten Verbindung zwischen der Objektposition und der Referenzlinie verstanden.

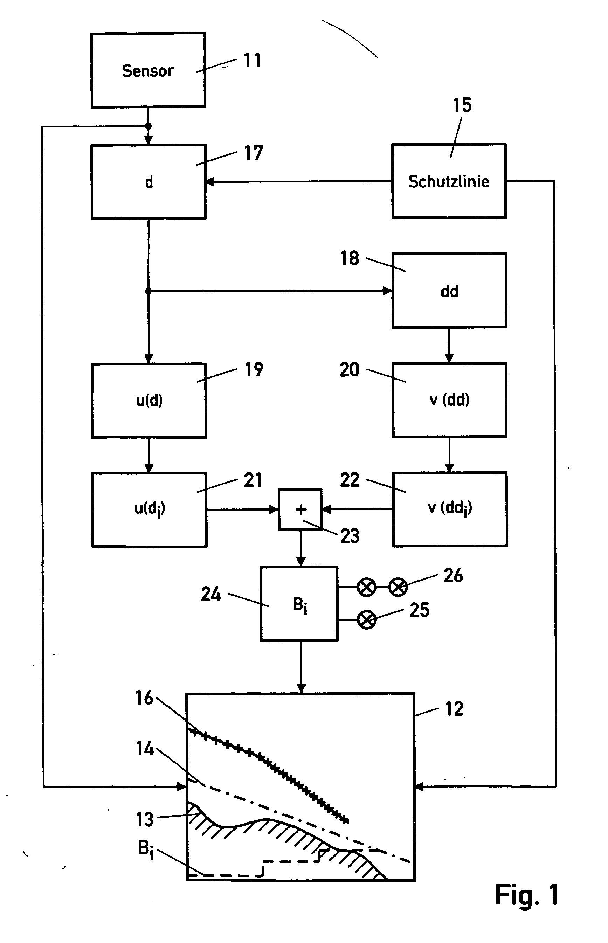

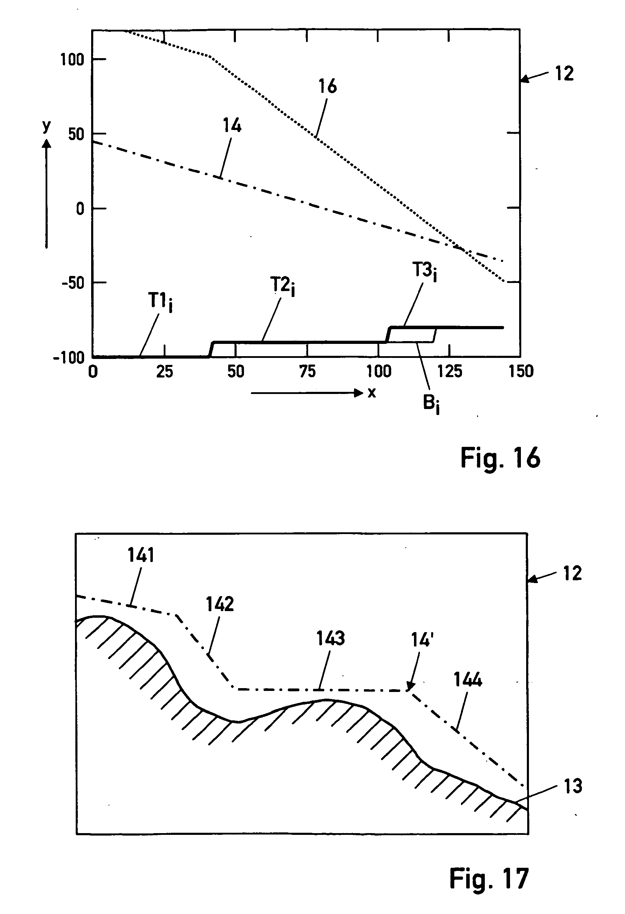

Im Ausführungsbeispiel der Fig. 1 - 16 besteht die unerwünschte Aktivität des Objekts im Eindringen in ein Schutzgebiet, das einem Küstenabschnitt vorgelagert ist. Die Referenzlinie wird als Schutzlinie 14 in einem Lageplan 12 in einem Erdkoordinaten-System oder in einem willkürlichen x/y-Koordinaten-System dargestellt, die seeseitig ein Schutzgebiet begrenzt, das einer ebenfalls im Lageplan 12 eingezeichneten Küstenlinie 13 vorgelagert ist. Die Schutzlinie 14 wird beispielhaft als Gerade vorgegeben. Bei stark zerklüfteter Küstenlinie oder bei Küstenabschnitten, bei denen sich einzelne Schutzgebiete weit vor die Küstenlinie 13 ausdehnen, wird die Schutzlinie 14' als ein Polygonzug aus zusammengesetzten, geraden Strecken 141 bis 144 gebildet, wie dies in Fig. 17 dargestellt ist. Jede dieser geraden Strecken 141 bis 144 bildet eine Schutzlinie 14, wie sie in Fig. 1 im Lageplan 12 dargestellt ist. Die Schutzlinie 14 wird beispielsweise als Gerade in Hessescher Normalform im Block 15 "Schutzlinie" generiert und im Lageplan 12 in x- und y-Koordinaten dargestellt. Die von den Sensoren 11 erfassten momentanen Objektpositionen eines verfolgten oder getrackten Objekts, z.B. eines Schiffes, werden mit ihren Ortskoordinaten im x-/y-Koordinatensystem in den Lageplan 12 eingetragen. Der sich dadurch ergebende Objekttrack, auch Objektspur genannt, ist im Lageplan 12 der Fig. 1 mit 16 bezeichnet.

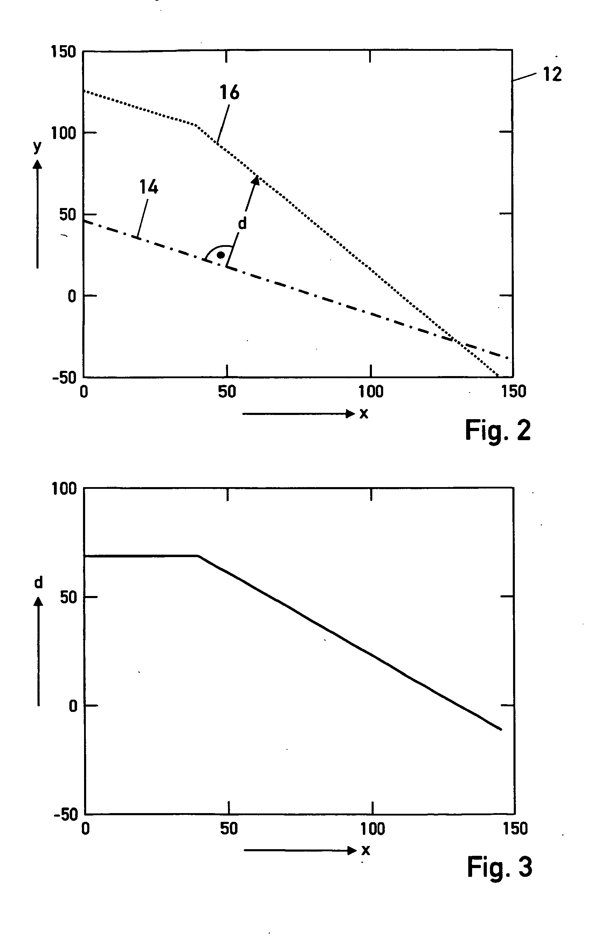

Wie in Fig. 2 für ein vereinfachtes Beispiel dargestellt ist, wird bei der Ermittlung der Bedrohung als Abstand jeder Objektposition des verfolgten oder getrackten Objekts von der Schutzlinie 14 der Lotabstand der Objektposition von der geraden Schutzlinie 14 herangezogen. Der Lotabstand ist die Länge des Lots, das eine senkrecht auf der Schutzlinie 14 stehende, von der Objektposition ausgehende Gerade ist. Gemäß Fig. 1 erfolgt die Bestimmung des Lotabstands d in einem Rechner 17, dem einerseits die Gleichung oder die x/y-Koordinaten der Schutzlinie 14 vom Block 15 zugeführt ist und der andererseits fortlaufend die Positionsdaten des verfolgten Objekts von den Sensoren 11 zugeführt erhält. Für die in Fig. 2 auf dem Lageplan 12 dargestellten Verhältnisse von Objekttrack 16 und Schutzlinie 14 sind die bestimmten Werte des Lotabstands d von den Objektpositionen im Objekttrack 16 in Fig. 3 dargestellt. Das Diagramm zeigt den Verlauf des Lotabstands d über die x-Koordinate des Lageplans 12.

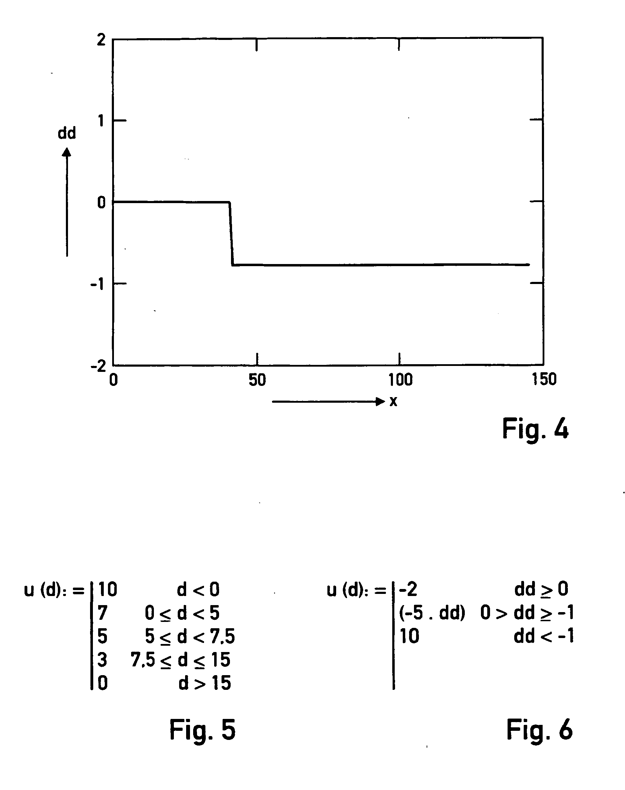

Aus ,den bestimmten Werten des Lotabstands d wird die Änderung dd des Lotabstands d berechnet. Im vorliegenden Beispiel der Fig. 1 wird hierzu das zeitliche Differenzial dd/dt des Lotabstands d gebildet, das die Annäherungsgeschwindigkeit des Objekts an die Schutzlinie 14 ergibt. Alternativ kann auch die Lotabstandsänderung dd als prozentuale Abstandsänderung des Objekts von der Schutzlinie 14 pro gefahrener Streckeneinheit ds berechnet werden, wozu das Wegdifferenzial dd/ds des Lotabstands d berechnet wird und s die vom Objekt zurückgelegte Strecke ist. In Fig. 4 ist für die in Fig. 2 dargestellten Verhältnisse von Objekttrack 16 und Schutzlinie 14 die Lotabstandsänderung dd über die x-Koordinate des Lageplans 12 dargestellt.

Für die vorzunehmende Bedrohungsanalyse werden die bestimmten Werte von Lotabstand dᵢ und Lotabstandsänderung ddᵢ einzeln bewertet und die bewerteten Werte von Lotabstand dᵢ und Lotabstandsänderung ddᵢ zu der Bedrohungsfunktion verknüpft. Bei einer ersten Methode der Bewertung werden Bewertungsfunktionen empirisch bestimmt und aus den Bewertungsfunktionen für die einzelnen bestimmten Werten von Lotabstand dᵢ und Lotabstandsänderung ddᵢ Bewertungsgrößen abgeleitet. Die Verknüpfung zur Bedrohungsfunktion erfolgt durch Addition der einer Objektposition zugehörigen Paare der Bewertungsgrößen für Lotabstandswert dᵢ und Lotabstandsänderungswert ddᵢ. In Fig. 1 sind hierzu Block 19, in dem die Bewertungsfunktion u(d) für den Lotabstand d abgelegt ist, Block 20, in dem die Bewertungsfunktion v(dd) für die Lotabstandsänderung dd abgelegt ist, Block 21, in dem die Bewertungsgrößen u(dᵢ) für die bestimmten Werte des Lotabstands dᵢ aus der Bewertungsfunktion u(d) abgeleitet werden, und Block 22 vorgesehen, in dem die Bewertungsgrößen v(ddᵢ) für die bestimmten Werte der Lotabstandsänderung ddᵢ aus der Bewertungsfunktion v(dd) abgeleitet werden.

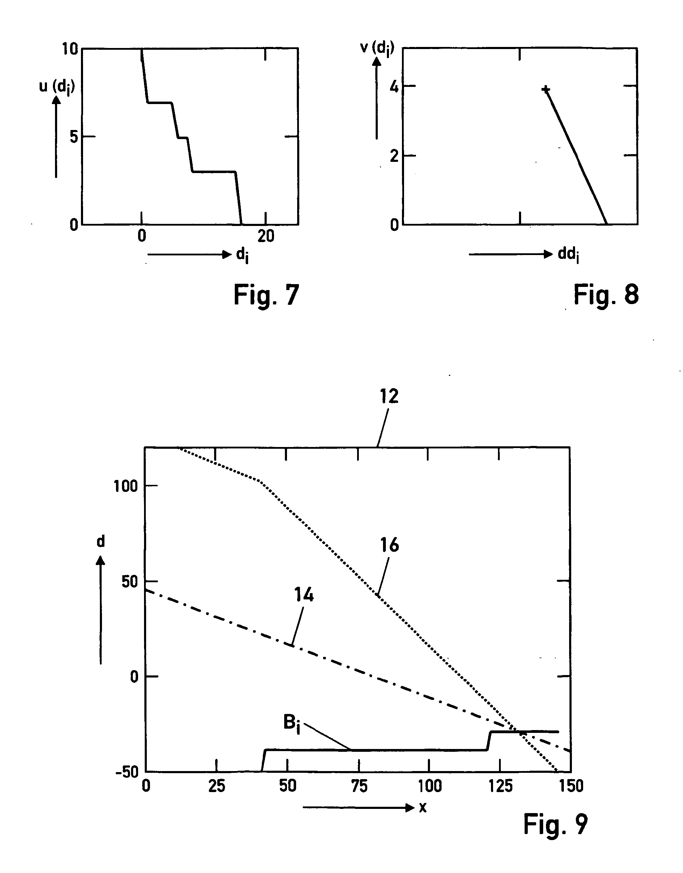

In Fig. 5 ist ein Beispiel für die im Block 19 abgelegte Bewertungsfunktion u(d) angegeben. In Fig. 6 ist ein Beispiel für die im Block 20 abgelegte Bewertungsfunktion v(dd) angegeben. Die mit der Bewertungsfunktion u(d) ermittelten Bewertungsgrößen u(dᵢ) für die bestimmten Werte des Lotabstands dᵢ sind in Fig. 7 und die mit der Bewertungsfunktion v(dd) ermittelten Bewertungsgrößen v(ddᵢ) für die bestimmten Werte der Lotabstandsänderung ddᵢ in Fig. 8 graphisch dargestellt. Die Bewertungsgrößen in Fig. 7 und Fig. 8 werden nunmehr paarweise im Addierer 23 addiert, d.h. diejenigen Bewertungsgrößen jeweils addiert, die der gleichen Objektposition zugehörig sind. Die einzelnen Summenwerte ergeben die in Fig. 9 dargestellte Bedrohungsfunktion Bᵢ, die hier zur Darstellung des Prinzips über die x-Koordinate des Lageplans 12 aufgetragen ist. Der Bereich der Summenwerte wird in Block 24 der Fig. 1 in mehrere Stufen, hier drei, unterteilt und jeder Stufe ein Bedrohungsgrad zugeordnet. Bei Übergang von einer Bedrohungsstufe zur nächsten wird ein entsprechender Alarm mit Angaben des Bedrohungsgrads ausgegeben. Wie beispielhaft dargestellt ist, kann eine akustische und/oder optische Anzeige 25 für Vorwarnung und eine akustische und/oder optische Anzeige 26 für Warnung eingeschaltet werden. Wie aus der in Fig. 9 beispielhaft dargestellten Bedrohungsfunktion Bᵢ, die für die in Fig. 2 angenommenen Verhältnisse sich mit den Bewertungsfunktionen gemäß Fig. 5 und 6 ergibt, zu erkennen ist, besteht im vorderen Bereich des Lageplans 12 keinerlei Bedrohung, da sich das verfolgte Objekt in etwa parallel zur Schutzlinie 14 bewegt. Im Knickpunkt des Objekttracks 16 wird eine Bedrohung mit noch geringem Bedrohungsgrad erkannt, da sich das Objekt nunmehr auf die Schutzlinie 14 zubewegt. Damit überschreitet die in Block 24 gebildete Bedrohungsfunktion Bᵢ die erste Schwelle und die Anzeige 25 für Vorwarnung wird eingeschaltet. Da sich das Objekt zunehmend auf die Schutzlinie 14 zubewegt, wird zu einem bestimmten Zeitpunkt ein wesentlich erhöhter Bedrohungsgrad erkannt und mit Überschreiten der zweiten Schwelle der Bedrohungsfunktion wird die Anzeige 26 für Warnung eingeschaltet.

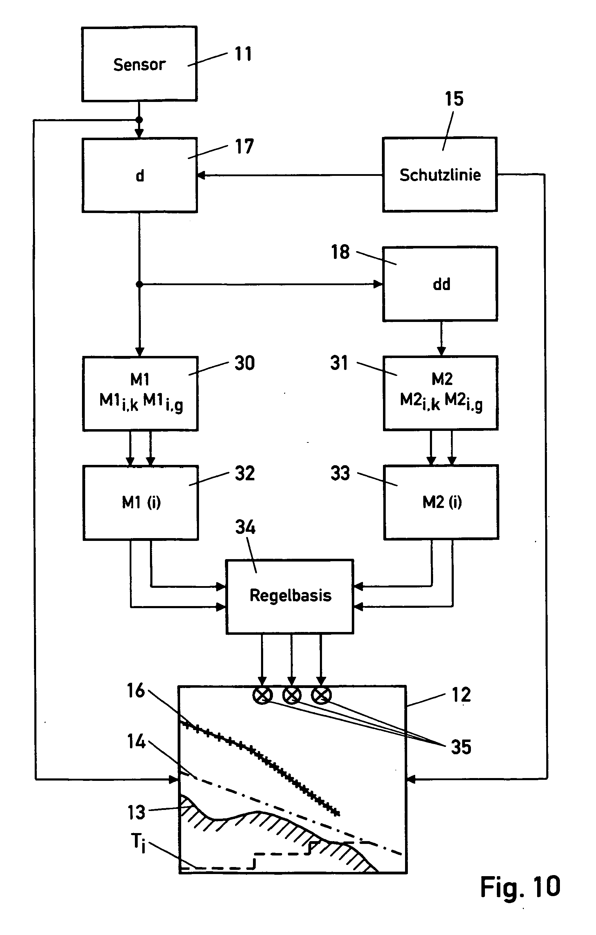

In Fig. 10 bis 16 ist eine Variante des Verfahrens zum Erkennen einer potentiellen Bedrohung durch im Überwachungsgebiet sich bewegende Objekte illustriert. Dieses Verfahren unterscheidet sich von dem vorstehend beschriebenen Verfahren insoweit, als die Bewertung der bestimmten Werte von Lotabstand dᵢ und Lotabstandsänderung ddᵢ nicht mit empirischen Bewertungsfunktionen vorgenommen wird, sondern mittels der bekannten Fuzzylogik. Das wiederum durch Verfahrensblöcke in Fig. 10 illustrierte Verfahren stimmt bezüglich des Lageplans 12 mit Schutzlinie 14 und Objekttrack 16, der Sensoren 11, des Blocks 15 zur Generierung der Schutzlinie 14 und der Rechner 17 und 18 zur Bestimmung der Lotabstände dᵢ bzw. der Lotabstandsänderungen ddᵢ bezüglich der einzelnen Objektpositionen im Objekttrack 16 überein, so dass insoweit die Bezugszeichen beibehalten sind.

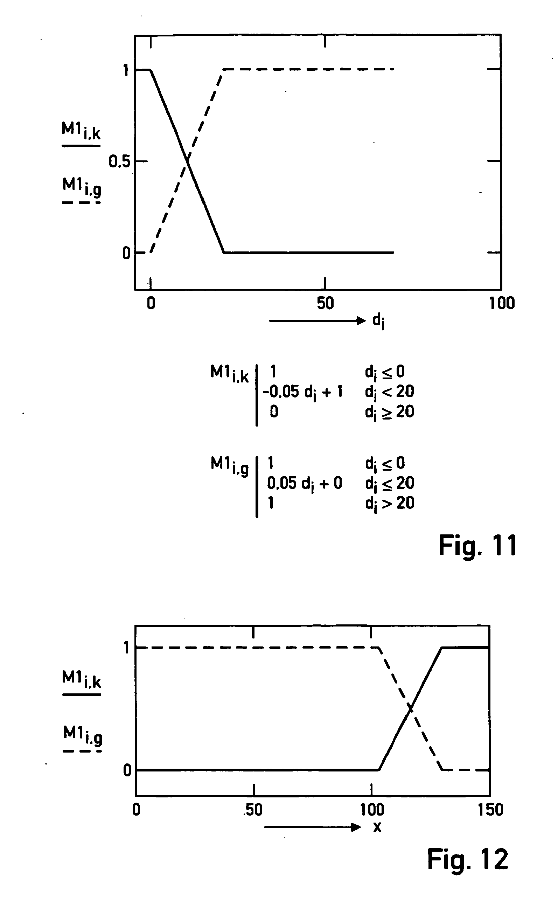

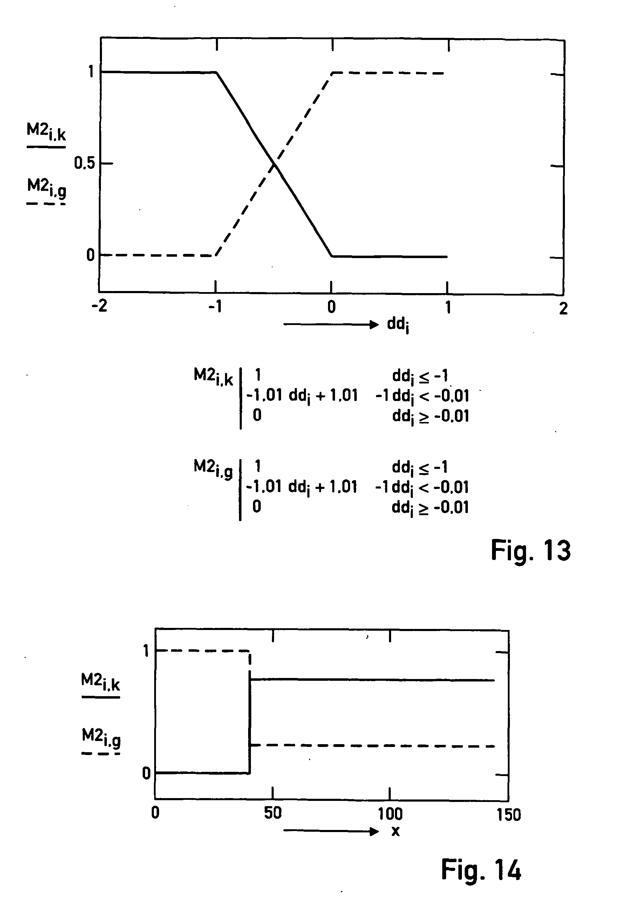

Zur Bewertung werden die bestimmten Werte von Lotabstand d einerseits und Lotabstandsänderung dd andererseits jeweils einer Fuzzyfication unterzogen. Hierzu werden von Lotabstand d und Lotabstandsänderung dd linguistische Variable gebildet, die mit Zugehörigkeitsfunktionen M1 bzw. M2 bewertet werden. Zur Bildung der linguistischen Variablen wird der Bereich der möglichen Lotabstände dᵢ bzw. der Lotabstandsänderungen ddᵢ jeweils in einen mit k bezeichneten Bereich "klein" und in einen mit g bezeichneten Bereich "groß" eingeteilt. Zwischenstufen sind möglich, beispielsweise "mittel" oder - wenn sinnvoll - noch weitere. Solche Zwischenstufen sind zur Vereinfachung im Folgenden nicht berücksichtigt.
Beispielhafte Zugehörigkeitsfunktionen für die beiden linguistischen Variablen k, g zur Fuzzyfication von Lotabstand d sind in Fig. 11 als Diagramm und als Tabelle dargestellt, wobei M1,k die Zugehörigkeitsfunktion der linguistischen Variablen k ("klein") ist und ausgezogen dargestellt ist und M1,g die Zugehörigkeitsfunktion der linguistischen Variablen g ("groß") ist und strichliniert dargestellt ist. Fig. 13 zeigt die gleiche Darstellung für die linguistischen Variablen g, k zur Fuzzyfication von Lotabstandsänderung ddᵢ, wobei mit M2,k (ausgezogen dargestellt) und M2,g (strichliniert dargestellt) die entsprechenden Zugehörigkeitsfunktionen bezeichnet sind.

Die Zugehörigkeitsfunktionen M1 und M2 sind in Fig. 10 in den Blöcken 30 und 31 abgelegt. Aus den Zugehörigkeitsfunktionen M1 und M2 werden für die bestimmten Werte von Lotabstand dᵢ und Lotabstandsänderung ddᵢ die Zugehörigkeitsfunktionswerte M1ᵢ, k, M1ᵢ, g, M2ᵢ, k und M2ᵢ, g der linguistischen Variablen k, g entnommen. Die Zugehörigkeitsfunktionswerte M1ᵢ, k und M1ᵢ, g der linguistischen Variablen k, g für den Lotabstand dᵢ sind in Fig. 12 in Zuordnung zu den Objektpositionen über die x-Koordinate des Lageplans 12 ausgezogen bzw. strichliniert dargestellt. Die gleiche Darstellung findet sich für die Zugehörigkeitsfunktionswerte M2ᵢ,k (ausgezogen) und M2ᵢ,g (strichliniert) für die Variablen k, g der Lotabstandsänderung ddᵢ in Fig. 14. Die Zuordnung der Zugehörigkeitsfunktionswerte M1ᵢ bzw. M2ᵢ der linguistischen Variablen k, g, zu den x-Koordinaten der Objektpositionen, wie sie in Fig. 12 und 14 dargestellt ist, wird in den Blöcken 32 und 33 gemäß Fig. 10 durchgeführt.

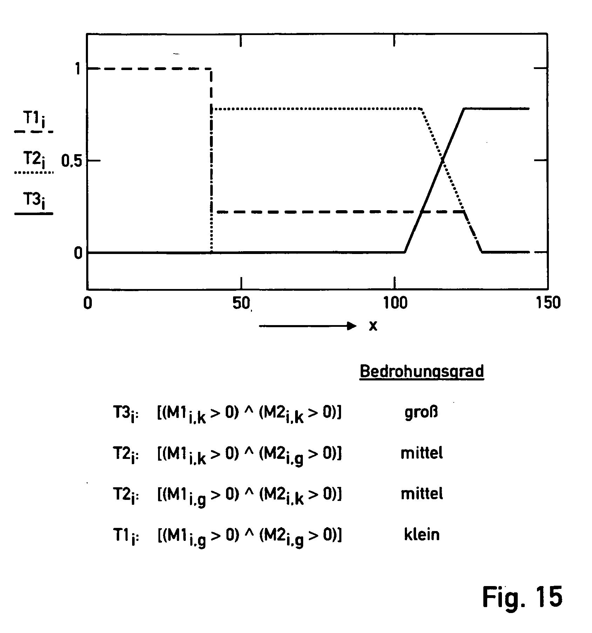

Aus den Zugehörigkeitsfunktionswerten M1ᵢ, M2ᵢ wird nunmehr durch unscharfes Schließen (sog. Fuzzyinferenz) über vorgebbare Regeln eine Glaubwürdigkeit der Bedrohung bestimmt. Diese Regeln sind in Fig. 10 im Block 34 (Regelbasis) abgelegt. Im vorliegenden Beispiel erfolgt das unscharfe Schließen durch eine fuzzylogische UND-Verknüpfung der Zugehörigkeitsfunktionswerte M1ᵢ der linguistischen Variablen k, g, des Lotabstands d mit den Zugehörigkeitsfunktionswerten M2ᵢ der linguistischen Variablen k, g, der Lotabstandsänderung dd, wobei sich vier Kombinationen ergeben. Die Regeln für die fuzzylogische UND-Verknüpfung sind für das gewählte Beispiel der Verhältnisse in Fig. 2 und der gewählten Zugehörigkeitsfunktionen gemäß Fig. 11 und 13 in Fig. 15 als Diagramm und als Tabelle dargestellt. Dadurch ergeben sich drei Bedrohungsgrade T3ᵢ=groß, T2ᵢ=mittel und T1ᵢ=klein. Die Bedrohungsfunktion T mit den Glaubwürdigkeitsbereichen bzw. Bedrohungsgraden T3ᵢ, T2i und T1ᵢ ist in Zuordnung zu dem Objekttrack 16 in Fig. 16 dargestellt. Zum Vergleich ist die aus dem vorhergehend beschriebenen Ausführungsbeispiel des Verfahren sich ergebende Bedrohungsfunktion Bᵢ ebenfalls in Fig. 16 eingezeichnet. Mit der Bedrohungsfunktion Tᵢ können wiederum verschiedenfarbige oder verschiedengeformte Warnzeichen 32 im Lagedisplay oder Lageplan 12 angesteuert werden. Auch ist es möglich, den Bedrohungsgrad, also die Stufe der Glaubwürdigkeit, durch Einfärben des Objekttracksymbols mit unterschiedlichen Signalfarben deutlich zu machen. Die Alarmauslösung über die Warnzeichen 35 ist auch mittels eines Schwellendetektors nach Defuzzyfication aus dem analogen Bedrohungssignal möglich.

Zur Vermeidung von Fehlalarmen, die durch Gier- oder Swaybewegungen des Objekts hervorgerufen werden können, wird die Annäherungsgeschwindigkeit des Objekts, also das zeitliche Differenzial des Lotabstands dd/dt, über einen längeren Zeitraum gemittelt oder durch Filter stabilisiert, bevor sie zur Bedrohungsanalyse herangezogen wird.

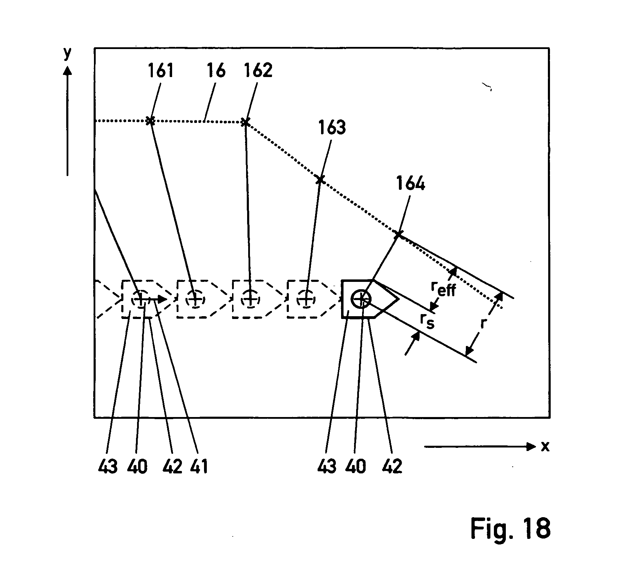

In Fig. 18 ist auf einem Display ein Szenario dargestellt, in dem ein die Sensoren tragendes Schiff als Beispiel für eine allgemeine Plattform das von ihm befahrene Seegebiet in einem größeren Umkreis auf Objekte überwacht, um anhand des Kurses des Eigenschiffs und des Fahrverhaltens des Objekts eine mögliche gefährliche Annäherung von Objekt und Eigenschiff rechtzeitig zu erkennen. Die Plattform- bzw. Schiffsposition 40 ist beispielhaft zu fünf aufeinanderfolgenden Zeitpunkten in einem x-/y-Koordinatensystem dargestellt, wobei die jüngste Schiffsposition 40 ausgezogen und die älteren Schiffpositionen strichliniert dargestellt sind. Der Kurs des Schiffes ist durch einen eingetragenen Geschwindigkeitsvektor 41 an der Schiffposition 40 gekennzeichnet. Ein Objekt im Überwachungsgebiet wird zu verschiedenen Zeitpunkten geortet und die Objektpositionen mit ihren x-/y-Koordinaten im Display dargestellt, wobei sich der Objekttrack 16 mit den momentanen Objektpositionen 161, 162, 163, 164 zu den verschiedenen Zeitpunkten ergibt. Die momentanen Objektpositionen 161 bis 164 wurden an den letzen vier Schiffspositionen zu den Zeitpunkten t₁, t₂, t₃, t₄ von den Sensoren des Schiffs vermessen.

Zur Ermittlung der Bedrohung, die von dem detektierten und verfolgen (getrackten) Objekt hinsichtlich einer gefährlichen Annäherung an das Eigenschiff ausgeht, wird als Referenzlinie eine Gefährdungslinie 42 herangezogen. Die Gefährdungslinie 42 umschließt eine um das Schiff bzw. Schiffsposition 40 aufgespannte, imaginäre Schutzzone 43, die objektfrei gehalten werden soll. Die Größe der Schutzzone 42 wird anhand der Gegebenheiten, wie Schiffsgröße, maximale Schiffsgeschwindigkeit, Manövrierfähigkeit des Schiffes etc. vorgegeben. Die Schutzzone 42 kann auch für einen Flottenverband ausgelegt werden.

Wie in Fig. 18 illustriert ist, wird nunmehr als Abstand der Objektpositionen 161 bis 164 von der Schutzlinie 42 die effektive Entfernung r_{eff} der Objektpositionen 161 bis 164 zu den Schiffspositionen 40 im jeweiligen Zeitpunkt t₁, t₂, t₃, t₄ herangezogen. Die effektive Entfernung r_{eff} ergibt sich dabei aus der Differenz der von den Sensoren des Schiffs gemessenen Entfernung r der Objektposition 161 bis 164 und des Entfernungsabschnitts rₛ, der innerhalb der Schutzzone 41 verläuft. Die Gefährdungslinie 42 kann eine beliebige Form aufweisen, z.B. rechteckig, tropfenförmig, elliptisch, kreisförmig etc. sein und ist in Fig. 18 nur beispielhaft dargestellt. Bei z.B. kreisförmiger Gefährdungslinie 42 kann deren Radialabstand rₛ von Schiffsposition 40 sehr klein gemacht werden, so dass die effektive Entfernung r_{eff} ohne wesentlichen Fehler gleich der tatsächlichen Entfernung r ist und somit die eingangs beschriebenen bewerteten und nach Bewertung verknüpften Abstände und Abstandsänderungen gleich den Entfernungen und Entfernungsänderungen gesetzt werden können. Die Bestimmung des Bedrohungsgrades erfolgt in der gleichen Weise wie ausführlich zu Fig. 1 bis 17 beschrieben worden ist, mit dem einzigen Unterschied, dass anstelle des Lotabstandes die effektive Entfernung r_{eff} und anstelle der Lotabstandsänderung das Zeit- oder Wegdifferenzial der effektiven Entfernung r_{eff} verwendet wird.

Anstelle der Displaydarstellung im x-/y-Koordinatensystem kann auch eine Darstellung im r/ϕ-Koordinatensystem erfolgen, und die Schiffsposition des Eigenschiffes ständig in der Displaymitte dargestellt wird.

Mittels des vorstehend beschriebenen Verfahrens kann nicht nur bei einem fahrenden Schiff der Grad der Bedrohung eines im Überwachungsgebiet detektierten Objekts ermittelt werden, sondern ebenso der Bedrohungsgrad für das ankernde oder an einer Pier liegende Schiff. In gleicher Weise wie beschrieben, ist auch um die Position des ankernden Schiffes die Schutzzone 43 definiert und der Bedrohungsgrad wird mit Hilfe der die Schutzzone 43 einschließenden Gefährdungslinie 42 wie eingangs beschrieben ermittelt.

## Patentansprüche

1. Verfahren zum Erkennen einer von einem in einem Überwachungsgebiet sich bewegenden Objekt ausgehenden potentiellen Bedrohung, bei dem das Objekt mittels Überwachungssensoren (11) detektiert und verfolgt wird und aus den momentanen Objektpositionen und Positionsänderungen der Grad der Bedrohung abgeleitet wird, **dadurch gekennzeichnet, dass** der Abstand der Objektposition des verfolgten Objekts von einer Referenzlinie und die Änderung des Abstands fortlaufend bestimmt, die bestimmten Werte von Abstand und Abstandsänderung einzeln bewertet und die bewerteten Werte zu einer Bedrohungsfunktion verknüpft werden.

2. Verfahren nach Anspruch 1, **dadurch gekennzeichnet, dass** die Bewertung mittels getrennter Bewertungsfunktionen (u(d), v(dd)) vorgenommen wird, die vorzugsweise empirisch bestimmt werden.

3. Verfahren nach Anspruch 2, **dadurch gekennzeichnet, dass** mit den bestimmten Werten von Abstand und Abstandsänderung aus den Bewertungsfunktionen (u(d), v(dd)) Bewertungsgrößen (u(dᵢ), v(ddᵢ)) abgeleitet und die jeweils einer Objektposition zugehörigen Paare der Bewertungsgrößen (u(dᵢ), v(ddᵢ)) für Abstandswert und Abstandsänderungswert (ddᵢ) zur Bildung der Bedrohungsfunktion (Bᵢ) zusammengefasst werden.

4. Verfahren nach Anspruch 1, **dadurch gekennzeichnet, dass** die Bewertung mittels Fuzzylogik vorgenommen wird.

5. Verfahren nach Anspruch 4, **dadurch gekennzeichnet, dass** die bestimmten Werte von Abstand einerseits und von Abstandsänderung andererseits jeweils als linguistische Variable (k, g) zur Fuzzyfication mit Zugehörigkeitsfunktionen (M1, M2) bewertet werden und aus den Zugehörigkeitsfunktionswerten (M1ᵢ, M2ᵢ) durch unscharfes Schließen über vorgebbaren Regeln eine Glaubwürdigkeit der Bedrohung bestimmt wird.

6. Verfahren nach Anspruch 5, **dadurch gekennzeichnet, dass** zur Bildung der linguistischen Variablen die ermittelten Werte von Abstand und Abstandsänderung jeweils in einen Bereich "klein" (k) und in einen Bereich "groß" (g) eingeteilt werden.

7. Verfahren nach Anspruch 5 oder 6, **dadurch gekennzeichnet, dass** die Zugehörigkeitsfunktionswerte (M1ᵢ, k; M1ᵢ, g; M2ᵢ,k; M2ᵢ, g) der linguistischen Variablen (k, g) "fuzzylogisch UND" verknüpft werden und dass jede "fuzzylogische UND"-Verknüpfung einen Bedrohungsgrad als Beitrag zur Bedrohungsfunktion (Tᵢ) liefert.

8. Verfahren nach einem der Ansprüche 1 bis 7, **dadurch gekennzeichnet, dass** die Abstandsänderung (dd) als zeitliches Differenzial der Abstände (d) berechnet wird.

9. Verfahren nach Anspruch 8, **dadurch gekennzeichnet, dass** das zeitliche Differenzial der Lotabstände (d) über einen längeren Zeitraum gemittelt oder einer anderen Filterfunktion unterzogen wird.

10. Verfahren nach einem der Ansprüche 1 bis 7, **dadurch gekennzeichnet, dass** die Abstandsänderung (dd) als Wegdifferenzial (dd/ds) der Abstände (d) berechnet wird, wobei (ds) das vom Objekt während der Abstandsänderung (dd) zurückgelegte Wegintervall ist.

11. Verfahren nach einem der Ansprüche 1 bis 10, **dadurch gekennzeichnet, dass** der Bereich der Bedrohungsfunktion in mehrere Stufen unterteilt wird und jeder Stufe ein Bedrohungsgrad zugeordnet wird.

12. Verfahren nach Anspruch 11, **dadurch gekennzeichnet, dass** der Bedrohungsgrad auf dem Lageplan (12) dargestellt und vorzugsweise durch Einfärben des auf dem Lageplan (12) dargestellten Objektsymbols mit unterschiedlicher Signalfarbe angezeigt wird.

13. Verfahren nach einem der Ansprüche 1 bis 12, **dadurch gekennzeichnet, dass** die momentanen Objektpositionen des verfolgten Objekts fortlaufend in einem Lageplan (12) festgehalten werden.

14. Verfahren nach einem der Ansprüche 1 bis 13, **dadurch gekennzeichnet, dass** eine im Überwachungsgebiet definierte Schutzlinie (14) aus mindestens einer Geraden als Referenzlinie herangezogen und als Abstand der Objektpositionen von der Referenzlinie der Lotabstand zur Schutzlinie verwendet wird.

15. Verfahren nach Anspruch 14, **dadurch gekennzeichnet, dass** die Schutzlinie (14) als ein aus mehreren Geraden (141, 142, 143, 144) zusammengesetzter Polygonzug definiert wird.

16. Verfahren nach Anspruch 14 oder 15, **dadurch gekennzeichnet, dass** die Schutzlinie (14) längs eines seeseitigen Randes eines vorzugsweise einem Küstenabschnitt vorgelagerten Schutzgebiets gezogen wird.

17. Verfahren nach einem der Ansprüche 1 bis 13, **dadurch gekennzeichnet, dass** als Referenzlinie eine Gefährdungslinie (42) herangezogen wird, die eine die Überwachungssensoren (11) tragende Plattform, vorzugsweise ein fahrendes oder ankerndes Schiff, umgebende Schutzzone (43) umschließt, und dass als Abstand der Objektpositionen von der Referenzlinie die Entfernung zwischen Objektposition und Plattform, reduziert um den in der Schutzzone (43) sich erstreckenden Entfernungsabschnitt, verwendet wird.

18. Verfahren nach Anspruch 17, **dadurch gekennzeichnet, dass** die Gefährdungslinie (42) mit Radialabstand kreisförmig um die Plattform gezogen wird.

19. Verfahren nach Anspruch 18, **dadurch gekennzeichnet, dass** der Radialabstand der Gefährdungslinie (42) von der Plattform sehr klein, vorzugsweise zu Null, gemacht wird.

## Claims

1. Method for identification of a potential threat originating from an object which is moving in a monitoring region, in which method the object is detected and tracked by means of monitoring sensors (11) and the degree of the threat is derived from the instantaneous object positions and the position changes, **characterized in that** the distance between the object position of the object being tracked and a reference line, and the change in the difference, are determined continuously, the specific values of the distance and distance change are assessed individually, and the assessed values are linked to a threat function.

2. Method according to Claim 1, **characterized in that** the assessment is carried out by means of separate assessment functions (u(d), v(dd)) which are preferably determined empirically.

3. Method according to Claim 2, **characterized in that** assessment variables (u(dᵢ), v(ddᵢ)) are derived from the assessment functions (u(d), v(dd)) using the determined values of the distance and distance change, and the respective pairs of assessment variables (u(dᵢ), v(ddᵢ)) which are associated with an object position for the distance value and distance change value (ddᵢ) are combined to form the threat function (Bᵢ).

4. Method according to Claim 1, **characterized in that** the assessment is carried out by means of fuzzy logic.

5. Method according to Claim 4, **characterized in that** the determined values of the distance on the one hand and of the distance change on the other hand are each assessed as linguistic variables (k, g) for fuzzification with association functions (M1, M2), and the credibility of the threat is determined by fuzzy detection using predeterminable rules from the association function values (M1ᵢ, M2ᵢ).

6. Method according to Claim 5, **characterized in that**, in order to form the linguistic variables, the determined values of the distance and distance change are each subdivided into a "low" range (k) and a "high" range (g).

7. Method according to Claim 5 or 6, **characterized in that** the association function values (M1ᵢ,k; M1ᵢ,g; M2ᵢ,k; M2ᵢ,g) of the linguistic variables (k, g) are linked by a "fuzzy-logic AND", and **in that** each "fuzzy-logic AND" link produces a threat degree as a contribution to the threat function (Tᵢ).

8. Method according to one of Claims 1 to 7, **characterized in that** the distance change (dd) is calculated as the differential of the distances (d) with respect to time.

9. Method according to Claim 8, **characterized in that** the differential of the perpendicular distances (d) with respect to time is averaged over a relatively long time period, or is subjected to some other filter function.

10. Method according to one of Claims 1 to 7, **characterized in that** the distance change (dd) is calculated as the path-length differential (dd/ds) of the distances (d), where (ds) is the path-length interval travelled by the object during the distance change (dd).

11. Method according to one of Claims 1 to 10, **characterized in that** the range of the threat function is subdivided into a plurality of steps and each step is allocated a threat degree.

12. Method according to Claim 11, **characterized in that** the threat degree is displayed on a situation plan (12) and is indicated with a different primary colour, preferably by colouring in the object symbol displayed on the situation plan (12).

13. Method according to one of Claims 1 to 12, **characterized in that** the instantaneous object positions of the object being tracked are displayed continuously on a situation plan (12).

14. Method according to one of Claims 1 to 13, **characterized in that** a protection line (14) which is defined in the monitoring region and comprises at least one straight line is used as the reference line, and the perpendicular distance to the protection line is used as the distance of the object positions from the reference line.

15. Method according to Claim 14, **characterized in that** the protection line (14) is defined as a train of polygons composed of a plurality of straight lines (141, 142, 143, 144).

16. Method according to Claim 14 or 15, **characterized in that** the protection line (14) is drawn along a coastal edge of a protection region which is preferably located in front of a coast section.

17. Method according to one of Claims 1 to 13, **characterized in that** a danger line (42) is used as the reference line and encloses a protection zone (43) which surrounds a platform to which the monitoring sensors (11) are fitted, preferably a moving or anchored marine vessel, and **in that** the distance between the object position and the platform minus the distance section extending in the protection zone (43) is used as the distance of the object positions from the reference line.

18. Method according to Claim 17, **characterized in that** the danger line (42) is drawn at a radial distance in the form of a circle around the platform.

19. Method according to Claim 18, **characterized in that** the radial distance of the danger line (42) from the platform is made very short, preferably tending to zero.

## Revendications

1. Procédé de détection d'une menace potentielle posée par un objet qui se déplace dans un domaine de surveillance, dans lequel l'objet est détecté et suivi au moyen de détecteurs de surveillance (11), le degré de menace étant déduit de la position instantanée de l'objet et des modifications de sa position, **caractérisé en ce que** la distance et les modifications de la distance entre la position de l'objet suivi et une ligne de référence sont déterminées en permanence, les valeurs définies de la distance et de la modification de distance étant évaluées séparément et les valeurs évaluées étant conjuguées pour former une fonction de menace.

2. Procédé selon la revendication 1, **caractérisé en ce que** l'évaluation s'effectue au moyen de fonctions séparées d'évaluation (u(d), v(dd)) qui sont de préférence déterminées empiriquement.

3. Procédé selon la revendication 2, **caractérisé en ce que** des valeurs définies de distance et de modification de distance, on déduit des grandeurs d'évaluation (u(d₁), v(ddᵢ)) à partir des fonctions d'évaluation (u(d), v(dd)), les paires de grandeurs d'évaluation (u(d₁), v(ddᵢ)) de la valeur de distance et de la valeur de modification des distances (ddᵢ) associées à la position de l'objet étant rassemblées pour former la fonction de menace (Bᵢ).

4. Procédé selon la revendication 1, **caractérisé en ce que** l'évaluation est réalisée à l'aide d'un logique floue.

5. Procédé selon la revendication 4, **caractérisé en ce que** les valeurs définies de la distance, d'une part, et des modifications de la distance, d'autre part, sont toutes évaluées comme variables linguistiques (k, g) de logique floue à fonctions d'appartenance (M1, M2), une probabilité de la menace étant définie à partir des valeurs (M1ᵢ, M2ᵢ) des fonctions d'appartenance, par fermeture floue en fonction de règles prédéterminées.

6. Procédé selon la revendication 5, **caractérisé en ce que** pour former les variables linguistiques, les valeurs définies de la distance et de la modification de distance sont réparties entre une plage "petit" (k) et une plage "grand" (g).

7. Procédé selon les revendications 5 ou 6, **caractérisé en ce que** les valeurs (M1ᵢ, k; M1ᵢ, g; M2ᵢ, k; M2ᵢ, g) des fonctions d'appartenance des variables linguistiques (k, g) sont reliées par un "ET de logique floue" et **en ce que** chaque conjugaison "ET de logique floue" délivre un degré de menace qui contribue à la fonction de menace (Tᵢ).

8. Procédé selon l'une des revendications 1 à 7, **caractérisé en ce que** la modification de distance (dd) est calculée comme différentielle des distances (d) en fonction du temps.

9. Procédé selon la revendication 8, **caractérisé en ce que** l'on calcule la moyenne de la différentielle des distances verticales (d) en fonction du temps pendant une durée assez longue ou **en ce qu'**on lui applique une autre fonction de filtrage.

10. Procédé selon l'une des revendications 1 à 7, **caractérisé en ce que** la variation de distance (dd) est calculée comme différentielle par rapport au parcours (dd/ds) des distances (d), (ds) étant l'intervalle spatial parcouru par l'objet pendant la modification de distance (dd).

11. Procédé selon l'une des revendications 1 à 10, **caractérisé en ce que** la plage de la fonction de menace est divisée en plusieurs gradins, un degré de menace étant associé à chaque gradin.

12. Procédé selon la revendication 11, **caractérisé en ce que** le degré de menace est représenté sur un plan de situation (12) et est affiché de préférence en colorant le symbole de l'objet représenté sur le plan de situation (12) par différentes couleurs de signalisation.

13. Procédé selon l'une des revendications 1 à 12, **caractérisé en ce que** les positions instantanées de l'objet suivi sont présentées en permanence dans un plan de situation (12).

14. Procédé selon l'une des revendications 1 à 13, **caractérisé en ce qu'**une ligne de protection (14) constituée d'au moins une droite qui sert de ligne de référence est tracée dans le domaine de surveillance, la distance verticale par rapport à la ligne de protection étant utilisée comme distance entre les positions de l'objet et la ligne de référence.

15. Procédé selon la revendication 14, **caractérisé en ce que** la ligne de protection (14) est définie comme étant le polygone constitué de plusieurs droites (141, 142, 143, 144).

16. Procédé selon les revendications 14 ou 15, **caractérisé en ce que** la ligne de protection (14) est tracée le long du bord maritime d'un domaine de protection de préférence superposé à une zone côtière.

17. Procédé selon l'une des revendications 1 à 13, **caractérisé en ce que** comme ligne de référence, on trace une ligne de danger (42) qui entoure une zone de protection (43) qui entoure une plate-forme, de préférence un navire en déplacement ou à l'ancre, qui porte les détecteurs de surveillance (11) et **en ce que** comme distance entre les positions de l'objet et la ligne de référence, on utilise la distance entre la position de l'objet et la plate-forme, diminuée de la partie de la distance qui s'étend dans la zone de protection (43).

18. Procédé selon la revendication 17, **caractérisé en ce que** la ligne de danger (42) est tracée en cercle qui entoure la plate-forme à distance radiale.

19. Procédé selon la revendication 18, **caractérisé en ce que** la distance radiale de la ligne de danger (42) par rapport à la plate-forme est rendue très petite et est de préférence nulle.
